# DEMANDE DE BREVET EUROPEEN

(11) **EP 2 093 000 A1**
(43) Date de publication de la demande: **26.08.2009**
(21) Numéro de dépôt: 09305095.3
(22) Date de dépôt: 02.02.2009
(51) Int. Cl.: B23B 29/034, B23Q 1/28

(54) **Tête pour outil tournant comportant des moyens de positionnement et de fixation par serrage - outil tournant comportant une telle tête**

(30) Priorité: 19.02.2008 FR 0800870
(71) Demandeur: Renault s.a.s., 92100 Boulogne-Billancourt (FR)
(72) Inventeur: Cheronneau, Gérard, 91460 Marcoussis (FR); Petiteville, Jonathan, 92000 Nanterre (FR)

(57) **Abrégé**

La présente invention concerne une tête d'outil (1) d'axe longitudinal X, comportant une première surface de montage (17), des moyens de positionnement de ladite tête (1) sur un corps (2) et des moyens de fixation par serrage.

Selon l'invention, ladite première surface de montage (17) est inclinée d'un angle α compris entre 80 et 60° par rapport à X, lesdits moyens de positionnement comportent une rainure (14) et une nervure (22), et lesdits moyens de fixation comportent :
- au moins deux évidements (23) ménagés dans une paroi latérale de ladite nervure (22) ; et
- au moins deux orifices (15), ménagés dans ladite rainure (14),
lesdits orifices (15) et lesdits évidements (23) étant disposés pour qu'il existe une pluralité de positions de ladite tête (1) sur ledit corps (2), dans lesquelles chacun desdits orifices (15) coïncide avec une portion de la longueur d'un desdits évidements (23).

## Description

La présente invention concerne une tête d'outil tournant ainsi qu'un outil tournant comportant une telle tête.

Le document JP-A-2004/114177 décrit une tête de perçage, interchangeable, qui est fixée sur le corps d'un outil tournant par des moyens de serrage. La tête décrite dans ce document est sensiblement cylindrique et comporte :
- une extrémité de travail qui présente une lame ou tout autre élément tranchant ou coupant susceptible de former un évidement dans un matériau du fait de la rotation de la tête ; et
- une extrémité de montage ou d'assemblage qui coopère avec une surface d'assemblage, ménagée sur une extrémité du corps tournant.

L'extrémité de montage de la tête présente une première surface de montage, perpendiculaire à l'axe longitudinal de la tête et qui supporte deux nervures perpendiculaires, l'une de ces nervures étant plus longues que l'autre et traversant de part en part la première surface de montage. Ces nervures coopèrent avec des rainures qui sont ménagées sur la surface d'assemblage du corps tournant, formant ainsi des moyens de blocage et de positionnement de la tête sur le corps.

La fixation de la tête sur le corps est assurée par serrage. Un trait de scie longitudinal est ménagé dans le fond de la rainure la plus profonde, laquelle coopère donc avec la nervure précitée, la plus longue. Un orifice traversant ce trait de scie et débouchant à la surface du corps est ménagé dans le corps. Une gouge spécifique est insérée dans cet orifice est permet, lorsqu'elle est vissée dans le corps, de rapprocher les deux parois du trait de scie, réduisant ainsi la largeur de la rainure la plus profonde. Cette dernière pince ainsi la nervure avec laquelle elle coopère, assurant, par là même, la fixation par serrage de la tête sur le corps.

Un but de la présente invention est de proposer une nouvelle tête apte à être fixée sur un corps d'outil tournant.

Ce but est atteint au moyen d'une tête d'outil adaptée pour être montée sur un corps d'outil pouvant entraîner en rotation ladite tête, ladite tête étant sensiblement cylindrique, d'axe longitudinal X et comportant une extrémité de travail, équipée d'au moins un élément tranchant, une extrémité de montage qui présente une première surface de montage apte à venir en contact avec une seconde surface de montage disposée sur ledit corps, ladite tête comportant, en outre, des moyens de positionnement de ladite tête sur ledit corps et des moyens de fixation par serrage de ladite tête sur ledit corps.

Selon l'invention, ladite première surface de montage est inclinée d'un angle α compris entre 80 et 60° par rapport audit axe X, lesdits moyens de positionnement comportent une rainure et une nervure, ménagées l'une sur ladite première surface de montage, l'autre sur ladite seconde surface de montage et qui sont aptes à coopérer par emboîtement, ladite nervure présentant une longueur sensiblement transversale à ladite première ou seconde surface de montage, lesdits moyens de fixation comportent :
- au moins deux évidements allongés, ménagés dans une paroi latérale de ladite nervure, et disposés longitudinalement selon la longueur de ladite nervure ; et
- au moins deux orifices, ménagés dans ladite rainure, de section transversale inférieure à la section transversale desdits évidements et débouchant latéralement dans ladite rainure ; ladite nervure est mobile longitudinalement dans ladite rainure, lesdits orifices et lesdits évidements sont conformés et disposés relativement les uns aux autres, pour qu'il existe une pluralité de positions de ladite tête sur ledit corps, dans lesquelles chacun desdits orifices coïncide avec une portion de la longueur d'un desdits évidements de manière à permettre le réglage de la position dudit axe X de ladite tête, le long de ladite nervure ;
et lesdits orifices et lesdits évidements sont aptes à coopérer avec des éléments de serrage pour assurer la fixation de ladite tête sur ledit corps, moyennant quoi, lesdits moyens de fixation permettent également d'ajuster la position de ladite tête sur ledit corps.

La tête selon l'invention peut être utilisée indifféremment, pour le perçage, le lamage, l'alésage ou le tréflage, par exemple.

Les deux surfaces de montage, inclinées d'un angle α tel que précité, permettent de renforcer le positionnement et la fixation de la tête sur l'outil lors de la rotation de la tête, en particulier. En effet, ces deux surfaces de montage, du fait de leur inclinaison déterminée, permettent de contrecarrer les forces centrifuges qui, lors de la rotation de la tête, tendent à séparer la tête du corps de l'outil.

La rainure et la nervure permettent un meilleur ajustement de la position de la tête sur la corps de l'outil, comparées aux deux nervures et rainures en croix de l'art antérieur. Cet ajustement est facilité du fait du simple coulissement de la tête le long de la nervure alors que dans l'art antérieur, la tête peut encore bouger selon deux directions (qui correspondent aux deux directions des rainures et nervures en croix), ce qui complique le positionnement de la tête sur le corps.

De plus, la fixation de la tête est renforcée du fait des éléments de serrage qui pénètrent la matière de la nervure et/ou de la tête.

Avantageusement, la tête comporte une piste de réglage qui permet la vérification de la position de ladite tête sur ledit corps.

Selon un mode de réalisation, la tête comporte des moyens de fixation complémentaires de ladite tête sur ledit corps, lesdits moyens de fixation complémentaires comportant au moins une patte longitudinale apte à coopérer avec ledit corps pour bloquer la translation longitudinale de ladite tête.

Avantageusement, ladite nervure et ladite rainure présentent une section de forme trapézoïdale de manière à former un assemblage du type queue d'aronde, ce qui permet de renforcer la fixation de la tête sur le corps.

La présente invention concerne également un outil comportant un corps sur lequel est monté une tête coupante pouvant être entraînée en rotation, ladite tête étant sensiblement cylindrique, d'axe longitudinal X et comportant une extrémité de travail, équipée d'au moins un corps tranchant, une extrémité de montage qui présente une première surface de montage, ladite seconde surface de montage étant en contact avec une seconde surface de montage située sur ledit corps, ladite tête et ledit corps comportant des moyens de positionnement et des moyens de fixation par serrage de ladite tête sur ledit corps.

Selon l'invention, ladite première et ladite seconde surface de montage sont inclinées d'un angle α compris entre 80 et 60° par rapport audit axe X, lesdits moyens de positionnement comportent une nervure et une rainure qui coopèrent par emboîtement, l'une étant ménagée sur ladite première surface de montage, tandis que l'autre est ménagée sur ladite seconde surface de montage, ladite nervure présentant une longueur transversale à ladite première ou seconde surface de montage, lesdits moyens de fixation comportent :
- au moins deux évidements allongés, ménagés dans ladite nervure et dont la dimension longitudinale s'étend selon la longueur de ladite nervure ;
- au moins deux orifices, ménagés dans ladite rainure, de section transversale inférieure à la section transversale desdits évidements et débouchant latéralement dans ladite rainure ; ladite nervure est mobile longitudinalement dans ladite rainure, lesdits orifices et lesdits évidements sont conformés et disposés relativement les uns aux autres, pour qu'il existe une pluralité de positions de ladite tête sur ledit corps, dans lesquelles chacun desdits orifices coïncide avec une portion de la longueur d'un desdits évidements de manière à permettre le réglage de la position dudit axe X de ladite tête, le long de ladite nervure et lesdits orifices et lesdits évidements sont aptes à coopérer avec des éléments de serrage pour assurer la fixation de ladite tête sur ledit corps, moyennant quoi, lesdits moyens de fixation permettent également d'ajuster la position de ladite tête sur ledit corps.

Avantageusement, l'outil comporte une piste de réglage qui permet la vérification de la position de ladite tête sur ledit corps.

Selon un mode de réalisation, l'outil comporte des moyens de fixation complémentaires de ladite tête sur ledit corps, lesdits moyens de fixation complémentaires comportant au moins une patte longitudinale qui coopère avec ledit corps pour bloquer en translation longitudinale selon ladite axe X, ladite tête sur ledit corps.

Avantageusement, ladite nervure et ladite rainure présentent une section de forme trapézoïdale de manière à former un assemblage du type queue d'aronde.

Selon un mode de réalisation, il existe un jeu entre les surfaces de ladite nervure et de ladite nervure qui sont en contact et en ce que des cales sont disposées de manière à combler partiellement ledit jeu. Ces cales permettent de rattraper le jeu qui existe entre la rainure et la nervure tout en permettant le réglage de la position de la tête sur le corps. Ainsi, il n'y a pas de soin particulier à apporter lors de la formation de la rainure et de la nervure. Le jeu qui peut être très important peut être rattrapé par les cales. Ces cales permettent également de renforcer la fixation. Elles permettent également de limiter l'usure de la tête et de l'outil au niveau de la nervure et de la rainure qui sont les zones les plus sollicitées.

La présente invention, ses caractéristiques et les différents avantages qu'elle procure seront mieux compris à la lecture de la description qui suit d'un mode de réalisation, présenté à titre d'exemple non limitatif, et qui fait référence aux dessins annexés, sur lesquels :
- la figure 1 représente une vue éclatée d'un mode de réalisation particulier de l'outil selon l'invention ;
- la figure 2 représente une vue de face d'un détail du corps et de la tête selon un mode de réalisation particulier de l'invention ;
- la figure 3 représente une vue de côté du mode de réalisation de la figure 2 ; et
- la figure 4 représente la tête montée sur le corps de l'outil, dans le cas du mode de réalisation représenté sur les figures 1 à 3.

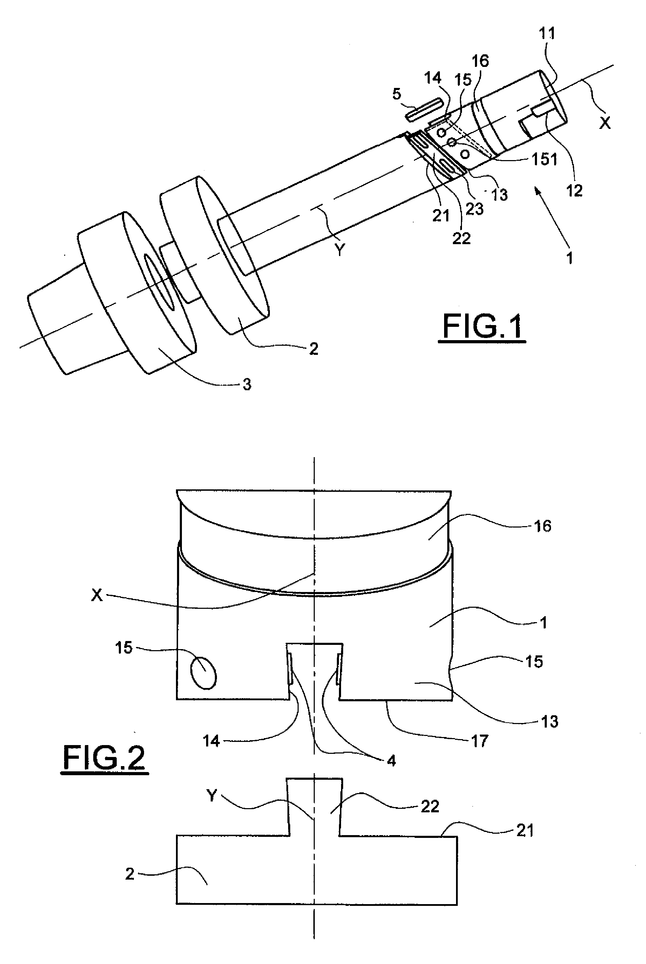

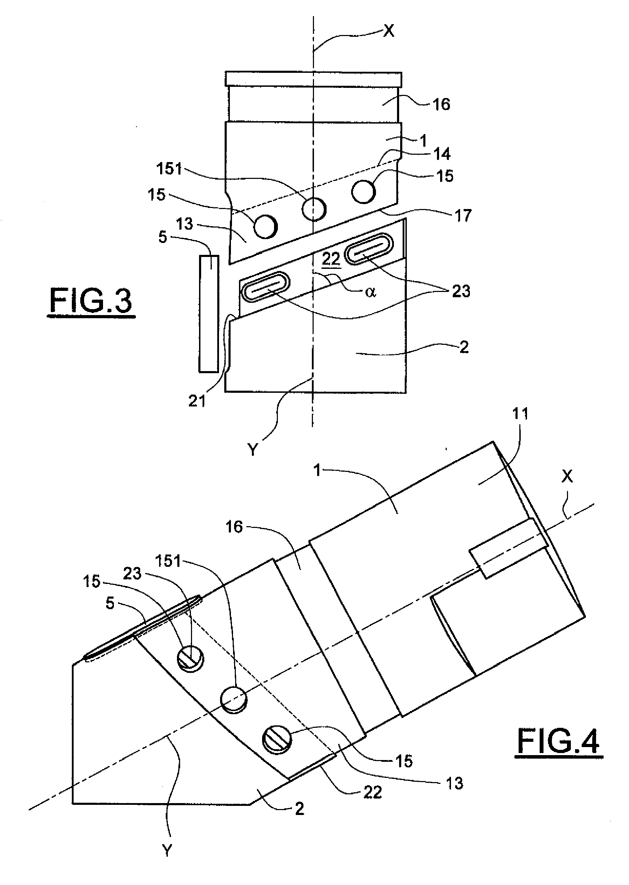

En référence à la figure 1, l'outil selon l'invention comporte une tête 1 qui est montée sur un corps 2. Cette tête 1 est apte à être entraînée en rotation, par l'intermédiaire du corps 2, au moyen d'un moteur tournant ou assimilé 3. La tête 1 qui est cylindrique et d'axe longitudinal X (désigné en tant que premier axe longitudinal), comporte une extrémité de travail 11 qui supporte un élément coupant ou tranchant 12. La tête 1 est adaptée pour être entraînée en rotation autour de son axe X. L'autre extrémité de la tête 1, qui est opposée à l'extrémité de travail 11, est l'extrémité de montage ou d'assemblage 13. Cette extrémité de montage 13 coopère avec le corps 2 de l'outil, au niveau d'une seconde surface de montage 21 qui comporte une nervure 22. Le corps 2 de l'outil présente, au moins au niveau de la seconde surface de montage 21, un second axe longitudinal Y. La nervure 22 s'étend transversalement à la surface de montage 21 et dépasse au dessus de cette dernière, selon le second axe longitudinal Y. Cette nervure 22 coopère avec une rainure 14 ménagée dans l'extrémité de montage 13. Deux cavités, ou évidements, oblongues, 23 sont formées sur au moins une face latérale de la nervure 22. Ces deux cavités oblongues 23 sont disposées chacune d'un côté du second axe longitudinal Y. Les cavités 23 sont distantes l'une de l'autre, selon la longueur de la nervure 22 et présentent chacune une dimension longitudinale qui s'étend selon la longueur de la nervure 22 (i.e. : la dimension la plus grande de chacune des cavités est disposée selon la longueur de la nervure 22, qui correspond à la dimension de la nervure 22 qui traverse la seconde surface de montage 21). Deux orifices de positionnement 15 sont ménagés dans l'extrémité de montage 13 de la tête 1 de manière à être perpendiculaires à longueur de la rainure 14 précitée et à déboucher dans cette dernière. Les orifices 15 présentent une section transversale sensiblement circulaire et sont disposés de part et d'autre du premier axe longitudinal X, de manière à ce que, lorsque l'on emboîte la nervure 22 dans la rainure 14 précitée, chacun des orifices 15 débouchent sensiblement au niveau du centre d'une des cavités allongées 23. De cette façon, en faisant coulisser la nervure 22, dans la rainure 14, de part et d'autre de l'axe X, il existe une multitude de positions de la tête 1 sur le corps 2 dans lesquelles les orifices 15 débouchent au niveau d'une portion de la longueur des cavités 23. Plus les cavités 23 sont allongées, plus le nombre de positions telles que précité est important. La multiplicité de ces positions permet de régler la position de la tête 1 sur le corps 2 de manière à faire coïncider les deux axes X et Y, comme il le sera plus amplement expliqué en référence à la figure 3.

Un troisième orifice, dit « de serrage » 151 est disposé entre les deux orifices de positionnement 15. Cet orifice de serrage 151 débouche sur la face latérale de la nervure 22, entre les deux cavités allongées 23, lorsque la tête 1 est montée sur le corps 2 et que les orifices 15 débouchent chacun au niveau d'une des cavités oblongues 23.

Une piste de réglage 16, annulaire, est creusée dans la surface cylindrique de la tête 1. Une patte de fixation 5 est fixée sur la surface externe du corps 2 et sur la surface externe de la tête 1, lorsque la tête 1 est montée sur le corps 2, de manière à empêcher la translation de la tête 1 par rapport au corps 2.

Comme représenté sur la figure 2, l'extrémité de montage de la tête 13 présente une première surface de montage 17 qui comporte la rainure précitée 14. Cette rainure 14 présente une section transversale trapézoïdale de manière à former, avec la nervure 22, qui présente un profil complémentaire, un assemblage de type queue d'aronde. La nervure 22 peut être emboîtée avec jeu dans la rainure 14, en faisant coulisser longitudinalement la nervure 22 dans la rainure 14. A cet effet, au moins une extrémité de la rainure 14 débouche au niveau de la surface externe de la tête 1. Des cales d'usure 4, en métal, par exemple, sont placées au niveau des parois latérales de la rainure 14, entre les parois latérales de la nervure 22 et les parois latérales de la rainure 14, afin de protéger la nervure 22 de l'usure due aux frottements lors des déplacement relatifs de la nervure 22 et de la rainure 14. Ces déplacements relatifs de la nervure 22 et de la rainure 14, proviennent du montage de la tête 1 sur le corps 2, du réglage de la position de la tête 1 sur le corps 2 et des vibrations lors de l'utilisation de l'outil comportant la tête 1. L'angle d'inclinaison des parois latérales de la rainure 14 et de la nervure 22 peut, par exemple, être de l'ordre de 3°. Lorsque la tête 1 est montée sur le corps 2, la première surface de montage 17 vient en contact avec la seconde surface de montage 21 du corps 2 et la nervure 22 est logée avec jeu dans la rainure 14.

Comme représenté sur la figure 3, la première surface de montage 17 et la seconde surface de montage 21 sont inclinées d'un angle α par rapport à l'axe longitudinal X. Dans le cas présent, l'angle α est sensiblement égal à 70°. Lors du montage, on met en contact les deux surfaces de montage 17 et 21 précitées, par insertion de la nervure 22 dans la rainure 14, selon la longueur de ces dernières. La nervure 22 entre dans la rainure 14, à travers la section transversale de cette dernière, au niveau de la surface externe 11 de la tête 1. On fait coïncider les orifices 15 avec le fond des cavités 23 et l'on insère des vis dans les orifices de positionnement 15, de manière à ce que l'extrémité de ces vis touche le fond conique des cavités oblongues 23, ce qui permet de positionner la tête 1 sur le corps 2. On règle ensuite plus précisément la position de la tête sur le corps 2, le long de la nervure 22 en faisant coulisser la tête 1 le long de la nervure 22. Ceci est possible du fait du coulissement des extrémités des vis sur le fond conique des cavités oblongues 23. La position de la tête 1 sur le corps 2 peut être ajustée et vérifiée grâce à la piste de réglage 16. Au moyen d'un comparateur qui se déplace dans la piste 16, il est possible de vérifier que le premier axe longitudinal X de la tête 1coincide avec le second axe longitudinal Y du corps 2 pour ne former qu'un seul est même axe longitudinal. Lorsque la tête 1 est correctement positionnée sur le corps 2, on insère ensuite une vis de serrage dans l'orifice de serrage 151. On visse la vis de serrage dont l'extrémité pénètre dans la matière de la nervure 22, au niveau de la paroi latérale de cette dernière et fixe donc la tête 1 par serrage sur le corps 2. On serre ensuite les vis insérées dans les orifices de réglage 15. Leurs extrémités pénètrent dans la matière de la nervure 22, au niveau du fond des cavités 23. Ces vis renforcent ainsi le serrage de la vis insérée dans l'orifice de serrage 151. On vient ensuite fixer la patte 5 sur le corps 2, au moyen d'une vis. Cette patte 5 est logée dans un logement longitudinal, ménagé dans la paroi cylindrique externe de la tête 1 et affleure donc au niveau de la surface de cette dernière. Il convient, bien évidemment, avant d'effectuer le réglage de la tête 1 sur le corps 2, de positionner correctement la patte 5 dans le logement longitudinal précité.

La figure 4 représente la tête 1 montée sur le corps 2, sans les vis de fixation et de serrage. Les orifices 15 coïncident avec les cavités oblongues 23 pour le positionnement et le réglage de la tête 1 sur le corps 2. La patte 5 peut être solidaire de la tête 1 et fixée sur le corps 2 au moyen d'une vis, ou fixée sur la tête 1 et le corps 2, au moyen de vis. Dans cette position, on voit bien qu'en déplaçant la tête 1 le long de la nervure 22, les orifices 15 coïncident avec une portion de la longueur du fond des cavités 23, quand la tête 1 occupe toute position comprise entre deux position extrêmes dans lesquelles au moins un des orifices 15 débouche au niveau de la surface latérale de la nervure 22, au-delà de la cavité allongée 23 correspondante, la tête 1 ayant été trop coulissée vers une extrémité de la nervure 22. Il est donc possible, en faisant coulisser la nervure 22 dans la rainure 14, les deux surfaces de montage 21 et 17 restant en contact, de déplacer la tête 1 sur le corps 2 de manière à aligner le premier axe longitudinal X avec le second axe longitudinal Y du corps 2. La vérification de cette position d'alignement se faisant avec un comparateur qui se déplace dans la piste de réglage 16 et qui vérifie que la trajectoire du comparateur dans la piste est bien circulaire, ce qui correspond à l'alignement des deux axes X et Y.

Les cavités oblongues 23 peuvent être remplacées par des lumières. Dans ce cas, les vis de positionnement traversent les orifices de positionnement 15 et les lumières 23 pour venir s'enfoncer dans la matière de la tête 1, de l'autre côté de la rainure 14. Le réglage de la position de la tête 1 sur le corps, se fait par coulissement de la tige des vis dans les lumières oblongues 23, selon la dimension longitudinale de ces dernières, c'est-à-dire parallèlement à la longueur de la nervure 22.

La nervure 22 et la rainure 14 peuvent également ne pas être traversantes et n'occuper qu'une partie de la surface de montage considérée. Dans ce cas, l'emboîtement de la nervure 22 et de la rainure 14 peut se faire selon le premier axe longitudinal X.

## Revendications

1. Tête d'outil (1) adaptée pour être montée sur un corps d'outil (2) pouvant entraîner en rotation ladite tête (1), ladite tête (1) étant sensiblement cylindrique, d'axe longitudinal X et comportant une extrémité de travail (11), équipée d'au moins un élément tranchant (12), une extrémité de montage (13) qui présente une première surface de montage (17) apte à venir en contact avec une seconde surface de montage (21) disposée sur ledit corps (2), ladite tête (1) comportant, en outre, des moyens de positionnement de ladite tête (1) sur ledit corps (2) et des moyens de fixation par serrage de ladite tête sur ledit corps,
**caractérisée en ce que** ladite première surface de montage (17) est inclinée d'un angle α compris entre 80 et 60° par rapport audit axe X, **en ce que** lesdits moyens de positionnement comportent une rainure (14) et une nervure (22), ménagées l'une sur ladite première surface de montage (17), l'autre sur ladite seconde surface de montage (22) et qui sont aptes à coopérer par emboîtement, **en ce que** ladite nervure (22) présentant une longueur sensiblement transversale à ladite première ou seconde surface de montage (17 ; 21), **en ce que** lesdits moyens de fixation comportent :
- au moins deux évidements (23), allongés, ménagés dans une paroi latérale de ladite nervure (22), et disposés longitudinalement selon la longueur de ladite nervure (22) ; et
- au moins deux orifices (15), ménagés dans ladite rainure (14), présentant une section transversale inférieure à la section transversale desdits évidements (23) et débouchant latéralement dans ladite rainure (14) ;
**en ce que** ladite nervure (22) est mobile longitudinalement dans ladite rainure (14), **en ce que** lesdits orifices (15) et lesdits évidements (23) sont conformés et disposés relativement les uns aux autres, pour qu'il existe une pluralité de positions de ladite tête (1) sur ledit corps (2), dans lesquelles chacun desdits orifices (15) coïncide avec une portion de la longueur d'un desdits évidements (23) de manière à permettre le réglage de la position dudit axe X de ladite tête (1), le long de ladite nervure (22) ;
et **en ce que** lesdits orifices (15) et lesdits évidements (23) sont aptes à coopérer avec des éléments de serrage pour assurer la fixation de ladite tête (1) sur ledit corps (2), moyennant quoi, lesdits moyens de fixation permettent également d'ajuster la position de ladite tête sur ledit corps.

2. Tête d'outil (1) selon la revendication 1, **caractérisée en ce qu'**elle comporte une piste de réglage (16) qui permet la vérification de la position de ladite tête (1) sur ledit corps (2).

3. Tête (1) selon l'une des revendications précédentes, **caractérisée en ce qu'**elle comporte des moyens de fixation complémentaires de ladite tête sur ledit corps, lesdits moyens de fixation complémentaires comportant au moins une patte longitudinale (5), apte à coopérer avec ledit corps pour bloquer la translation longitudinale de ladite tête (1).

4. Tête (1) selon l'une quelconque des revendications précédentes, **caractérisée en ce que** ladite nervure (22) et ladite rainure (14) présentent une section de forme trapézoïdale de manière à former un assemblage du type queue d'aronde.

5. Outil comportant un corps (2) sur lequel est monté une tête (1) pouvant être entraînée en rotation, ladite tête (1) étant sensiblement cylindrique, d'axe longitudinal X et comportant une extrémité de travail (11), équipée d'au moins un corps tranchant (12), une extrémité de montage (13) qui présente une première surface de montage (17), ladite première surface de montage (21) étant en contact avec une seconde surface de montage (21) située sur ledit corps (2), ladite tête (1) et ledit corps (2) comportant des moyens de positionnement et des moyens de fixation par serrage de ladite tête (1) sur ledit corps (2),
**caractérisé en ce que** ladite première et ladite seconde surface de montage (17 ; 21) sont inclinées d'un angle α compris entre 80 et 60° par rapport audit axe X, **en ce que** lesdits moyens de positionnement comportent une nervure (22) et une rainure (14) qui coopèrent par emboîtement, l'une étant ménagée sur ladite première surface de montage (17), tandis que l'autre est ménagée sur ladite seconde surface de montage (21), **en ce que** ladite nervure (22) présentant une longueur transversale à ladite première ou seconde surface de montage (17 ; 21) , **en ce que** lesdits moyens de fixation comportent :
- au moins deux évidements (23), allongés, ménagés dans une paroi latérale de ladite nervure (22), et disposés longitudinalement selon la longueur de ladite nervure (22) ; et
- au moins deux orifices (15), ménagés dans ladite rainure (14), présentant une section transversale inférieure à la section transversale desdits évidements (23) et débouchant latéralement dans ladite rainure (14) ;
**en ce que** ladite nervure (22) est mobile longitudinalement dans ladite rainure (14), **en ce que** lesdits orifices (15) et lesdits évidements (23) sont conformés et disposés relativement les uns aux autres, pour qu'il existe une pluralité de positions de ladite tête (1) sur ledit corps (2), dans lesquelles chacun desdits orifices (15) coïncide avec une portion de la longueur d'un desdits évidements (23) de manière à permettre le réglage de la position dudit axe X de ladite tête (1), le long de ladite nervure (22) ;
et **en ce que** lesdits orifices (15) et lesdits évidements (23) sont aptes à coopérer avec des éléments de serrage pour assurer la fixation de ladite tête (1) sur ledit corps (2), moyennant quoi, lesdits moyens de fixation permettent également d'ajuster la position de ladite tête sur ledit corps.

6. Outil selon la revendication 5, **caractérisé en ce que** ladite tête (1) comporte une piste de réglage (16) qui permet la vérification de la position de ladite tête (1) sur ledit corps (2).

7. Outil selon l'une des revendications 5 et 6, **caractérisé en ce qu'**il comporte des moyens de fixation complémentaires de ladite tête sur ledit corps, lesdits moyens de fixation complémentaires comportant au moins une patte longitudinale (5) qui coopère avec ledit corps (2) pour bloquer en translation longitudinale selon ladite axe X, ladite tête (1) sur ledit corps (2).

8. Outil selon l'une quelconque des revendications précédentes, **caractérisée en ce que** ladite nervure (22) et ladite rainure (14) présentent une section de forme trapézoïdale de manière à former un assemblage du type queue d'aronde.

9. Outil selon l'une quelconque des revendications 5 à 8, **caractérisé en ce qu'**il existe un jeu entre les surfaces de ladite nervure (22) et de ladite nervure (14) qui sont en contact et **en ce que** des cales (4) sont disposées de manière à combler partiellement ledit jeu.
